# EUROPEAN PATENT SPECIFICATION

(11) **EP 3 734 586 B1**
(45) Date of publication and mention of the grant of the patent: **14.10.2026**
(21) Application number: 18896794.7
(22) Date of filing: 29.10.2018
(51) Int. Cl.: G09G 3/00, G09G 3/20, G09G 3/36, H04N 17/00, H04N 9/31

(54) **PROJECTOR SYSTEM AND CAMERA EVALUATION SYSTEM**
PROJEKTORSYSTEM UND KAMERABEURTEILUNGSSYSTEM
SYSTÈME DE PROJECTEURS ET SYSTÈME D'ÉVALUATION DE CAMÉRA

(30) Priority: 27.12.2017 JP 2017250532
(43) Date of publication of application: 04.11.2020
(73) Proprietor: JVCKENWOOD Corporation, Yokohama-shi, Kanagawa 2210022 (JP)
(72) Inventor: FURUYA Masato, Yokohama-shi, Kanagawa 221-0022 (JP)
(74) Representative: Wimmer, Hubert
(86) International application number: PCT/JP2018/040133
(87) International publication number: WO 2019/130791

(56) References cited:
- JP-A- 2006 115 077
- JP-A- 2009 077 114
- JP-A- 2013 101 285
- JP-A- H0 654 352
- JP-A- H08 317 432
- US-A1- 2008 024 469
- US-A1- 2008 143 978
- US-A1- 2011 141 380

## Description

The present disclosure relates to a projector system and a camera evaluation system.

### [BACKGROUND ART]

When a camera as disclosed in JP 2004-247979 is newly developed, the camera is generally evaluated by photographing different places with the camera under development.

US 2008 024 469 A1 discloses a method of displaying an image with a display system which includes generating a plurality of map values based on at least one training image. A first image frame is received. A plurality of sub-frames corresponding to the first image frame are generated based on a geometric relationship between a reference coordinate system and a plurality of projectors, and based on the plurality of map values. The plurality of sub-frames are projected onto a target surface with the plurality of projectors, thereby producing a resulting image on the target surface.

US 2011 141 380 A1 discloses a projector. When images are projected in a superposing manner on a screen by a plurality of projectors, a controller of a projector obtains drive timing information of liquid crystal panels of the plurality of projectors and controls a drive timing of a drive unit on the basis of the obtained drive timing information so as to reduce a flicker of a display image.

### [SUMMARY OF THE INVENTION]

Therefore, since it takes time to perform the evaluation, and the photographing conditions vary depending on the weather, photographing time, and the like, even in the same place, it is difficult to evaluate the camera with high reproducibility.

An object of an embodiment is to provide a projector system and a camera evaluation system that can evaluate a camera with good reproducibility.

In accordance with the present invention, a projector system as set forth in the appended claims is provided. In particular, a first aspect of an embodiment provides a projector system including: a plurality of projectors for generating an image based on the input video data and superimposing the image to display a display image, wherein the plurality of projectors include a video data processor for converting the video data into sub-frame data in which one frame is composed of a plurality of sub-frames, and a liquid crystal display device for switching the images for each frame based on the sub-frame data and displaying the images in a frame sequential manner, and the video data processor includes a different sub-frame data conversion table for each of the plurality of projectors, and a sub-frame data generator for converting the video data into the sub-frame data based on the sub-frame data conversion table.

In accordance with the projector system and the camera evaluation system according to an embodiment, the camera can be evaluated with good reproducibility.

### [BRIEF DESCRIPTION OF THE DRAWINGS]

FIG. 1 is a configuration diagram illustrating a projector system and a camera evaluation system according to an embodiment.
FIG. 2 is a configuration diagram illustrating a projector in the projector system and the camera evaluation system according to an embodiment.
FIG. 3 is a configuration diagram illustrating a video data processor according to Examples 1 and 2.
FIG. 4A is a diagram illustrating an example of a sub-frame data conversion table according to Example 1.
FIG. 4B is a diagram illustrating an example of the sub-frame data conversion table according to Example 1.
FIG. 4C is a diagram illustrating an example of the sub-frame data conversion table according to Example 1.
FIG. 4D is a diagram illustrating an example of the sub-frame data conversion table according to Example 1.
FIG. 5 is a diagram illustrating the order of sub-frames in which the data value for each projector becomes 1 within one frame period.
FIG. 6 is a diagram illustrating a relationship between a plurality of projectors and data values of sub-frames at each gradation value.
FIG. 7 is a diagram illustrating a case where a plurality of projectors convert video data into sub-frame data based on the same sub-frame data conversion table.
FIG. 8 is a diagram illustrating a response characteristic of the liquid crystal to the sub-frame data illustrated in FIG. 7.
FIG. 9 is a diagram illustrating a case where a plurality of projectors convert video data into sub-frame data based on different sub-frame data conversion tables.
FIG. 10 is a diagram illustrating response characteristics of the liquid crystal to the sub-frame data of the plurality of projectors illustrated in FIG. 9.
FIG. 11A is a diagram illustrating an example of a sub-frame data conversion table according to Example 2.
FIG. 11B is a diagram illustrating an example of the sub-frame data conversion table according to Example 2.
FIG. 11C is a diagram illustrating an example of the sub-frame data conversion table according to Example 2.
FIG. 11D is a diagram illustrating an example of the sub-frame data conversion table according to Example 2.
FIG. 12 is a diagram illustrating the order of sub-frames in which the data value for each projector becomes 1 within one frame period.
FIG. 13 is a diagram illustrating a relationship between a plurality of projectors and data values of sub-frames at each gradation value.
FIG. 14 is a diagram illustrating a case where a plurality of projectors convert video data into sub-frame data based on different sub-frame data conversion tables.

### [MODES FOR CARRYING OUT THE INVENTION]

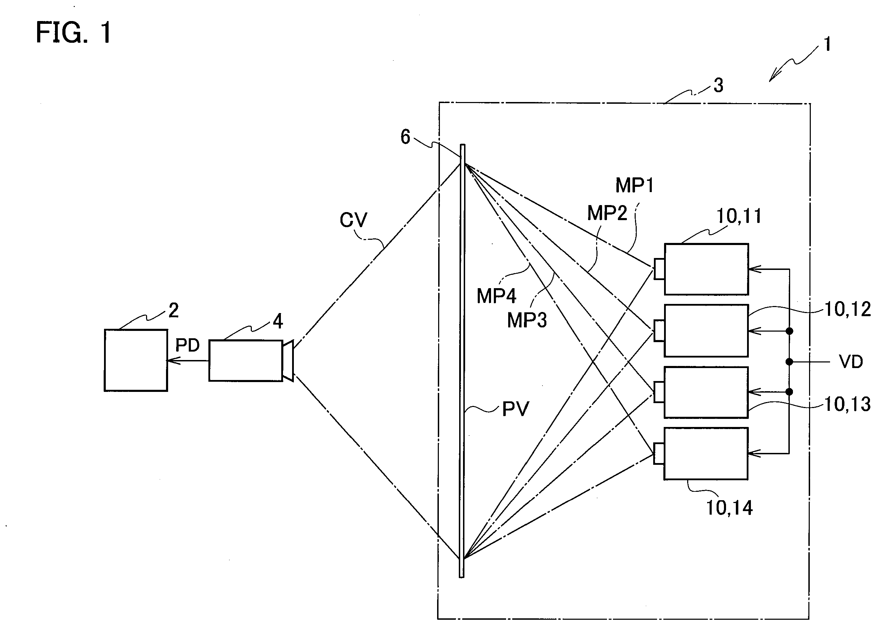

A projector system of the invention and a camera evaluation system according to an embodiment will be described with reference to FIG. 1. A camera evaluation system 1 for evaluating a camera 4 to be evaluated includes a data analysis device 2 and a projector system 3. The projector system 3 includes a plurality of projectors 10 and a screen 6. FIG. 1 illustrates four projectors 11 to 14 arranged in a vertical direction as the plurality of projectors 10 for easy understanding.

To the projectors 11 to 14 configuring the projector system 3, images captured under various types of conditions at different places, at different times, in different weather, or in different seasons are input as video data VD. The projector 11 generates an image MP1 based on the video data VD and projects the image MP1 on the screen 6. The projector 12 generates an image MP2 based on the video data VD and projects the image MP2 on the screen 6. The projector 13 generates an image MP3 based on the video data VD and projects the image MP3 on the screen 6. The projector 14 generates an image MP4 based on the video data VD and projects the image MP4 on the screen 6.

The images MP1 to MP4 are synchronized and superimposed on the screen 6 by the projectors 11 to 14, and displayed as a display image PV. A method for generating the images MP1 to MP4 will be described later.

The camera 4 to be evaluated captures the display image PV displayed on the screen 6 as a captured image CV. When the camera 4 is an in-vehicle camera, the camera 4 detects, for example, a center line on a road based on the captured image CV, generates detection result data PD, and outputs the detection result data PD to the data analysis device 2. The data analysis device 2 analyzes the detection result data PD. The camera 4 is evaluated based on the analysis result.

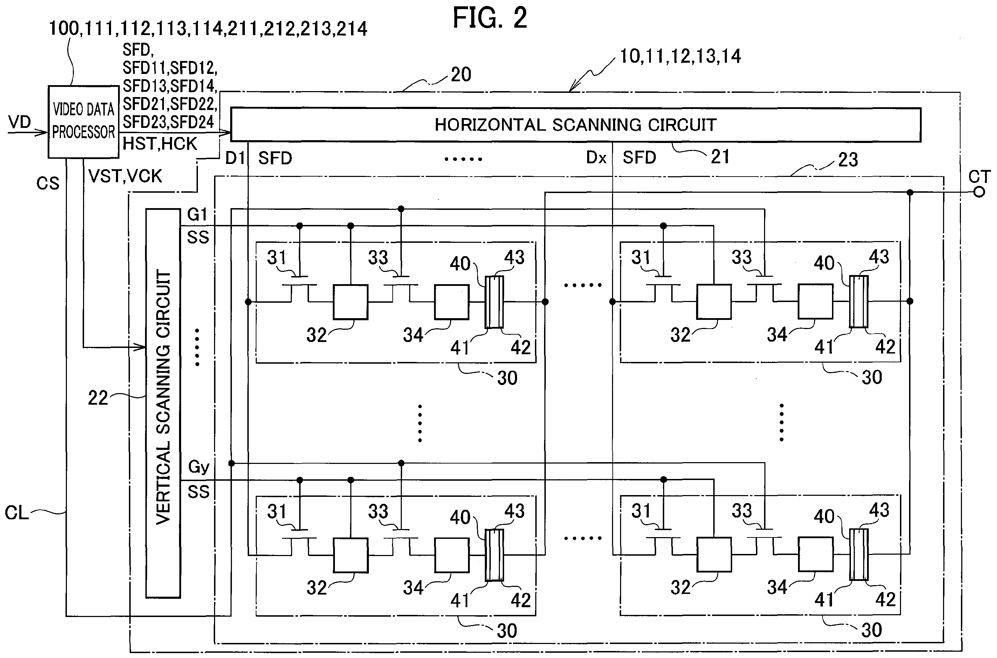

The projector 10 will be described with reference to FIG. 2. The projector 10 includes a video data processor 100 and a liquid crystal display device 20. The video data processor 100 may be configured by software executed by a central processor (CPU), or may be configured by hardware such as a circuit.

The video data VD is input to the video data processor 100 as a digital signal. The video data processor 100 converts the video data VD into sub-frame data SFD in which one frame is composed of a plurality of sub-frames. The video data processor 100 sequentially outputs the sub-frame data SFD to the liquid crystal display device 20 in pixel units. The operation of the video data processor 100 will be described later.

The liquid crystal display device 20 is a frame-sequential active matrix liquid crystal display device that switches and displays the image MP for each frame. The liquid crystal display device 20 includes a horizontal scanning circuit 21, a vertical scanning circuit 22, and a display pixel unit 23. The sub-frame data SFD is sequentially input to the horizontal scanning circuit 21 from the video data processor 100 in pixel units.

The horizontal scanning circuit 21 is connected to a plurality (x) of column data lines D (D1 to Dx) arranged in the horizontal direction. The vertical scanning circuit 22 is connected to a plurality (y) of row scanning lines G (G1 to Gy) arranged in the vertical direction. FIG. 2 shows only two column data lines D1 and Dx, and two row scanning lines G1 and Gy.

The display pixel unit 23 includes a plurality of (x × y) pixels 30 arranged in a matrix at each intersection of a column data line D and a row scanning line G. FIG. 2 shows only four pixels 30 by associating it with the two column data lines D1 and Dx and the two row scanning lines G1 and Gy.

The pixel 30 includes a switching unit 31 (first switching unit), a sampling-and-holding unit 32 (first sampling-and-holding unit), a switching unit 33 (second switching unit), a sampling-and-holding unit 34 (second sampling-and-holding unit), and a liquid crystal display element 40.

The liquid crystal display element 40 includes a reflective electrode 41, a common electrode 42, and a liquid crystal 43. The reflective electrode 41 is formed for each pixel 30. The common electrode 42 is formed in common for all of the pixels 30. The liquid crystal 43 is filled in a gap (cell gap) between the reflective electrode 41 and the common electrode 42.

The switching units 31 and 33 are configured by N-channel MOS type field effect transistors (hereinafter, referred to as NMOS transistors). The switching unit 31 has a gate connected to the row scanning line G, a drain connected to the column data line D, and a source connected to the input side of the sampling-and-holding unit 32.

The sampling-and-holding unit 32 is configured by a flip-flop having a static random access memory (SRAM) structure, and is connected to the row scanning line G. The sampling-and-holding unit 32 is connected to the column data line D via the switching unit 31.

The switching unit 33 has a gate connected to a control signal line CL, a drain connected to the output side of the sampling-and-holding unit 32, and a source connected to the input side of the sampling-and-holding unit 34. The sampling-and-holding unit 34 is configured by a flip-flop having an SRAM structure, and the output side thereof is connected to the reflective electrode 41 of the liquid crystal display element 40. The common electrode 42 is connected to a common terminal CT.

The operation of the liquid crystal display device 20 will be described. A vertical synchronization signal VST and a vertical shift clock signal VCK are input to the vertical scanning circuit 22 from the video data processor 100. The vertical scanning circuit 22 generates a row selection signal SS based on the vertical synchronization signal VST and the vertical shift clock signal VCK and selects a row scanning line G every horizontal period. The switching units 31 for one pixel row connected to the selected row scanning line G are simultaneously turned on by the row selection signal SS.

Sub-frame data SFD having a plurality of sub-frames forming one frame is sequentially input to the horizontal scanning circuit 21 from the video data processor 100 in pixel units. A horizontal synchronization signal HST and a horizontal shift clock signal HCK are input to the horizontal scanning circuit 21 from the video data processor 100.

The horizontal scanning circuit 21 outputs the sub-frame data SFD to the column data lines D1 to Dx based on the horizontal synchronization signal HST and the horizontal shift clock signal HCK. Thus, the sub-frame data SFD corresponding to each pixel 30 is written to the sampling-and-holding unit 32 of each pixel 30 of the pixel row selected by the vertical scanning circuit 22 via the switching unit 31.

The sampling-and-holding unit 32 samples and holds the sub-frame data SFD. When all the pixel rows are selected by the vertical scanning circuit 22, the video data for one sub-frame comes to be written to the sampling-and-holding units 32 of all the pixels 30. The switching unit 31 and the sampling-and-holding unit 32 constitute a first holding means.

When the sub-frame data SFD is written to the sampling-and-holding units 32 of all the pixels 30, the video data processor 100 outputs a control signal CS to the switching units 33 of all the pixels 30 via the control signal line CL. As a result, the switching units 33 of all of the pixels 30 are turned on and the sub-frame data SFD for one sub-frame written to the sampling-and-holding unit 32 is simultaneously transmitted to the corresponding sampling-and-holding unit 34 for all the pixels 30. The switching unit 33 constitutes a transfer means.

The sampling-and-holding unit 34 samples and holds the sub-frame data SFD for one sub-frame. The sub-frame data SFD for one sub-frame is held in each sampling-and-holding unit 34 only during one sub-frame period. The sampling-and-holding unit 34 constitutes a second holding means.

A drive voltage corresponding to the sub-frame data SFD is applied to the reflective electrode 41 of the liquid crystal display element 40 by the sampling-and-holding unit 34. The drive voltage applied to the reflective electrode 41 is the ground voltage of the MOS transistor when the sub-frame data SFD held by the sampling-and-holding unit 34 is "0", and is the power supply voltage of the MOS transistor when the sub-frame data SFD is "1". A common voltage is applied to all the pixels 30 from a common terminal CT to the common electrode 42 of the liquid crystal display element 40.

The liquid crystal 43 is driven according to the potential difference between the reflective electrode 41 and the common electrode 42. When illumination light is applied to the display pixel unit 23 from outside, the illumination light is modulated for each pixel 30 and displayed as an image.

The liquid crystal display device 20 holds the sub-frame data SFD for one sub-frame in the sampling-and-holding units 34 of all the pixels 30 during one sub-frame period. The liquid crystal display device 20 sequentially writes the sub-frame data SFD for the next one sub-frame to the sampling-and-holding units 32 of all the pixels 30 within one sub-frame period. Thereby, the liquid crystal display device 20 can display the image MP in a frame-sequential manner.

It is assumed that only the evaluation result PD is output from the camera 4 to be evaluated and a signal such as a video signal or a synchronization signal required for synchronizing an external device is not output. It is also assumed that the camera 4 does not have a function of inputting a synchronization signal from an external device and synchronizing the camera 4 with the external device. Therefore, the projector 10 and the camera 4 are not easily synchronized.

Therefore, assuming that the camera 4 and the plurality of projectors 11 to 14 are asynchronous, the configuration of the plurality of projectors 11 to 14 and the method of generating the sub-frame data SFD by the plurality of projectors 11 to 14, which enable the camera 4 to capture the images MP1 to MP4 (display images PV) projected from the plurality of projectors 11 to 14 with good reproducibility, will be described as in Examples 1 and 2.

### [Example 1]

The projectors 11 to 14 are different in the configuration of the video data processors 111 to 114 shown in FIG. 2 and the method of generating the pieces of sub-frame data SFD11 to SFD14 in the video data processors 111 to 114, and the configurations and operations other than the above are the same. The video data processors 111 to 114 correspond to the above described video data processor 100 and the pieces of sub-frame data SFD11 to SFD14 correspond to the above described sub-frame data SFD.

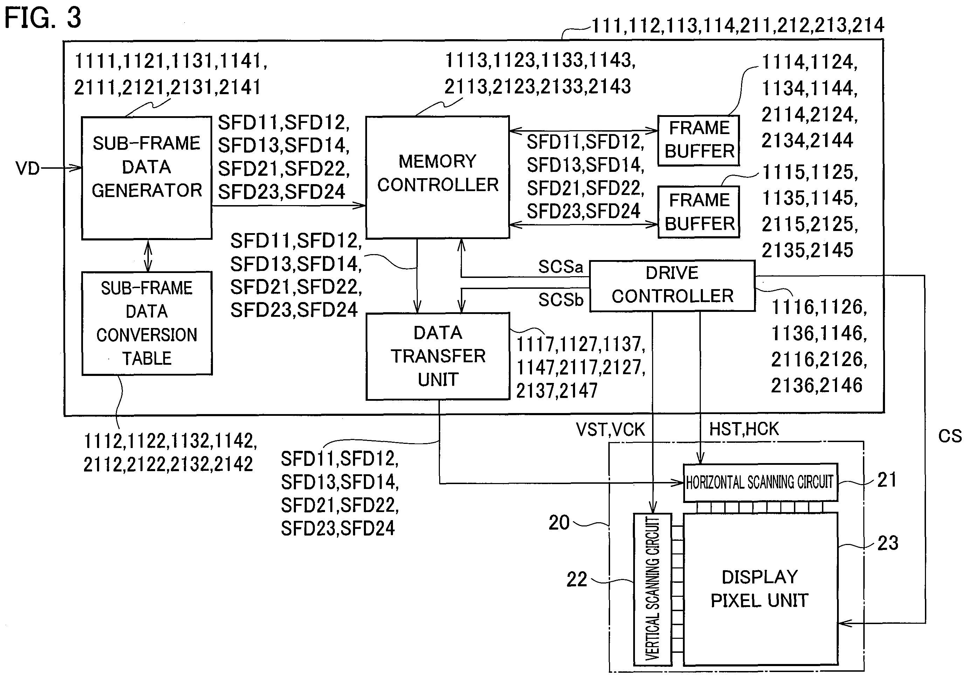

The projector 11 includes a video data processor 111. As shown in FIG. 3, the video data processor 111 includes a sub-frame data generator 1111, a sub-frame data conversion table 1112, a memory controller 1113, frame buffers 1114 and 1115, a drive controller 1116, and a data transfer unit 1117.

Video data VD is input to the sub-frame data generator 1111. The video data VD is n-bit gradation data. The sub-frame data generator 1111 converts the video data VD into sub-frame data SFD11 composed of 2ⁿ sub-frames SF based on the sub-frame data conversion table 1112 and outputs the sub-frame data SFD11 to the memory controller 1113.

The memory controller 1113 sequentially writes the sub-frame data SFD11 to one frame buffer 1114. When the sub-frame data SFD11 for one sub-frame is written to the frame buffer 1114, the memory controller 1113 writes the sub-frame data SFD11 for the next one sub-frame to the other frame buffer 1115, and the sub-frame data SFD11 for one sub-frame written to the frame buffer 1114 is read and output to the data transfer unit 1117.

With the double buffer configuration including the frame buffers 1114 and 1115, the memory controller 1113 can alternately write and read the sub-frame data SFD11 to and from the frame buffers 1114 and 1115. The data transfer unit 1117 outputs the sub-frame data SFD11 to the horizontal scanning circuit 21.

The drive controller 1116 outputs a synchronization control signal SCSa to the memory controller 1113 and outputs a synchronization control signal SCSb to the data transfer unit 1117. The drive controller 1116 outputs the vertical synchronization signal VST and the vertical shift clock signal VCK to the vertical scanning circuit 22 and outputs the horizontal synchronization signal HST and the horizontal shift clock signal HCK to the horizontal scanning circuit 21.

The drive controller 1116 controls the operation timing of the memory controller 1113, the data transfer unit 1117, the vertical scanning circuit 22, and the horizontal scanning circuit 21 by using the synchronization control signals SCSa and SCSb, the vertical synchronization signal VST, the vertical shift clock signal VCK, the horizontal synchronization signal HST and the horizontal shift clock signal HCK. Thus, the sub-frame data SFD11 is input to each pixel 30 included in the display pixel unit 23.

The projector 12 includes a video data processor 112. The video data processor 112 includes a sub-frame data generator 1121, a sub-frame data conversion table 1122, a memory controller 1123, frame buffers 1124 and 1125, a drive controller 1126, and a data transfer unit 1127.

The projector 13 includes a video data processor 113. The video data processor 113 includes a sub-frame data generator 1131, a sub-frame data conversion table 1132, a memory controller 1133, frame buffers 1134 and 1135, a drive controller 1136, and a data transfer unit 1137.

The projector 14 includes a video data processor 114. The video data processor 114 includes a sub-frame data generator 1141, a sub-frame data conversion table 1142, a memory controller 1143, frame buffers 1144 and 1145, a drive controller 1146, and a data transfer unit 1147.

The video data VD is input to the sub-frame data generators 1121, 1131, and 1141. The sub-frame data generator 1121 converts the video data VD into sub-frame data SFD12 composed of 2ⁿ sub-frames SF based on the sub-frame data conversion table 1122 and outputs the sub-frame data SFD12 to the memory controller 1123.

The sub-frame data generator 1131 converts the video data VD into sub-frame data SFD13 composed of 2ⁿ sub-frames SF based on the sub-frame data conversion table 1132 and outputs the sub-frame data SFD13 to the memory controller 1133.

The sub-frame data generator 1141 converts the video data VD into sub-frame data SFD14 composed of 2ⁿ sub-frames SF based on the sub-frame data conversion table 1142 and outputs the sub-frame data SFD14 to the memory controller 1143.

The memory controllers 1123, 1133, and 1143 execute the same processing as the memory controller 1113. The frame buffers 1124 and 1125, the frame buffers 1134 and 1135, and the frame buffers 1144 and 1145 execute the same processing as the frame buffers 1114 and 1115. The drive controllers 1126, 1136, and 1146 execute the same processing as the drive controller 1116. The data transfer units 1127, 1137, and 1147 execute the same processing as the data transfer unit 1117.

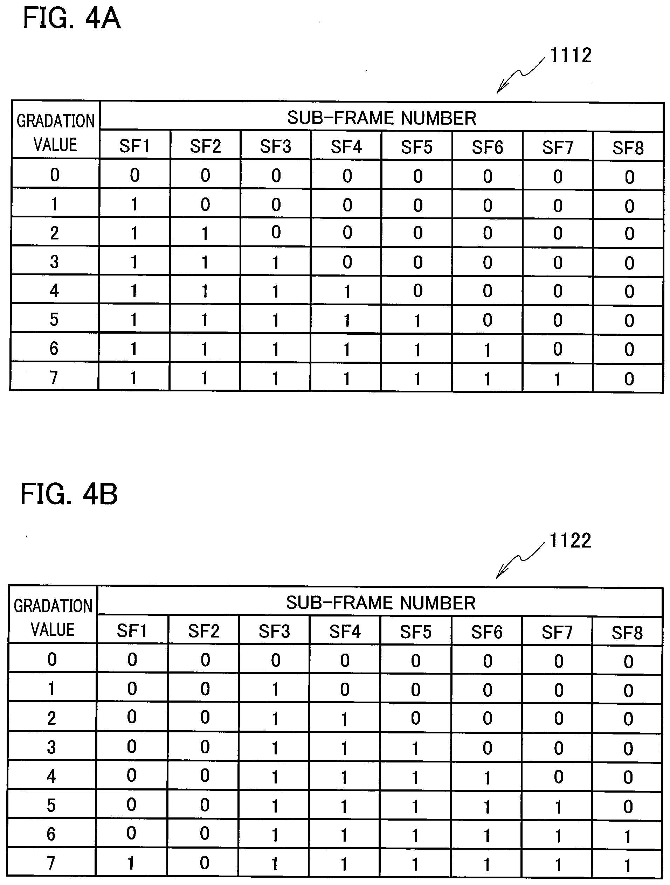

FIGS. 4A to 4D illustrate an example of the relationship between the gradation values and the data values of the sub-frame SF in the sub-frame data conversion tables 1112, 1122, 1132, and 1142. Reference numerals SF1 to SF8 shown in FIGS. 4A to 4D indicate sub-frame numbers, and the data value of the sub-frame SF for each gradation value is shown as 0 or 1.

A data value of 1 corresponds to a display period in the pixel 30, and a data value of 0 corresponds to a non-display period in the pixel 30. FIGS. 4A to 4D show a case where the number of gradations is eight and one frame is composed of eight sub-frames SF for easy understanding. The number of gradations and the number of sub-frames are not limited to those in Example 1, and are set as appropriate.

The sub-frame data conversion tables 1112, 1122, 1132, and 1142 are set so that the sub-frame numbers at which the gradation values increase first are different. For example, as shown in FIG. 4A, the sub-frame data conversion table 1112 is set so that the gradation value increases from the sub-frame SF1. As shown in FIG. 4B, the sub-frame data conversion table 1122 is set so that the gradation value increases from the sub-frame SF3.

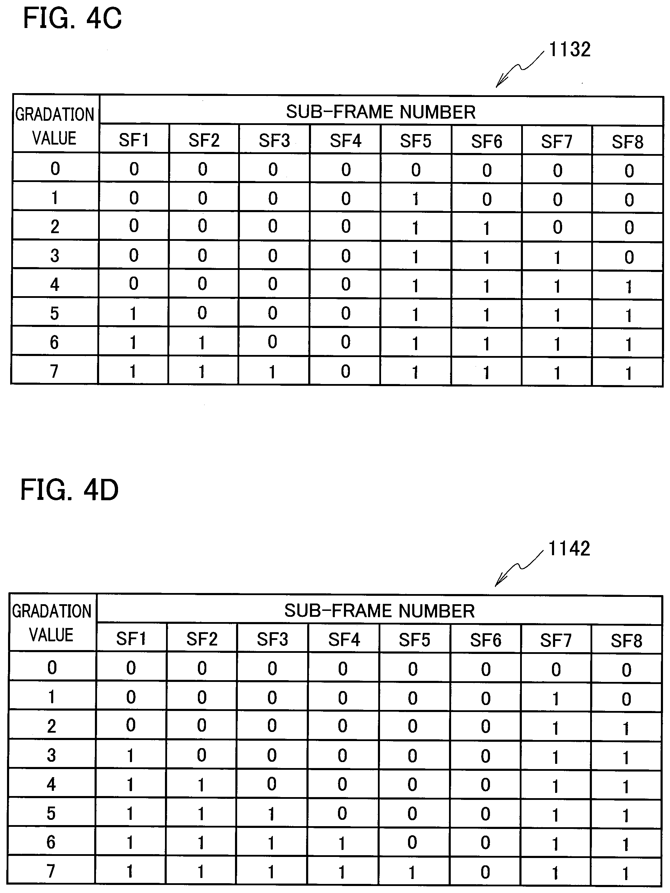

As shown in FIG. 4C, the sub-frame data conversion table 1132 is set so that the gradation value increases from the sub-frame SF5. As shown in FIG. 4D, the sub-frame data conversion table 1142 is set so that the gradation value increases from the sub-frame SF7.

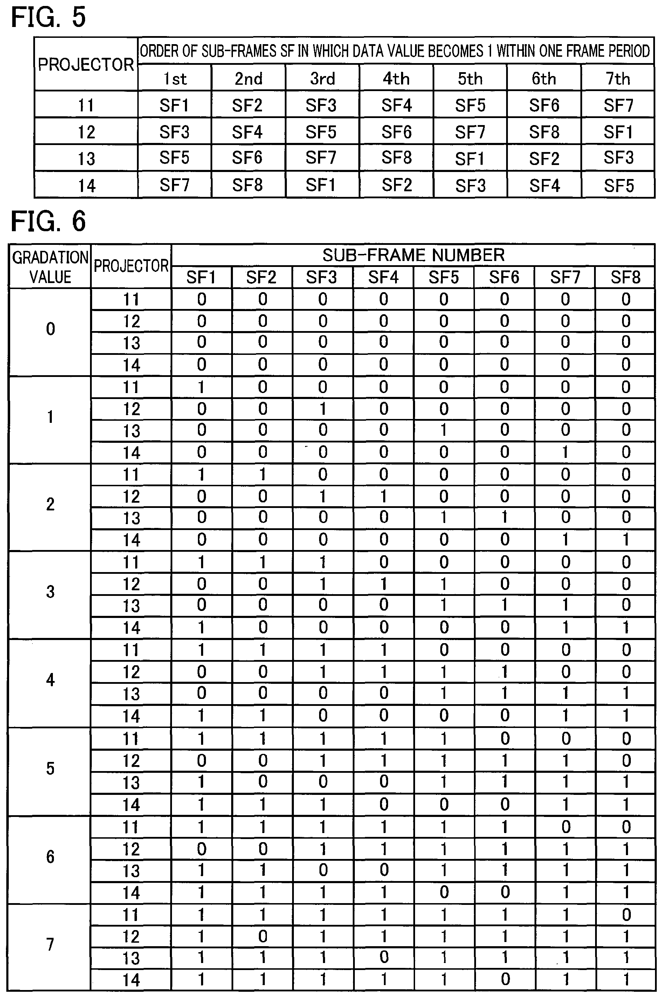

FIG. 5 shows the order of the sub-frames SF in which the data values become 1 in the projectors 11 to 14. FIG. 6 shows the relationship between the projectors 11 to 14 and the data values of the sub-frames SF at each gradation value based on FIGS. 4A to 4D.

For example, when the gradation value is 2, the projector 11 displays an image in which the period of the sub-frames SF1 and SF2 is a display period. The projector 12 displays an image in which the period of the sub-frames SF3 and SF4 is a display period. The projector 13 displays an image in which the period of the sub-frames SF5 and SF6 is a display period. The projector 14 displays an image in which the period of the sub-frames SF7 and SF8 is a display period. That is, the sub-frames SF1 to SF8 constituting one frame are a display period in any one of the projectors 11 to 14. Therefore, the display image PV in which all of the sub-frames SF1 to SF8 are in the display period is displayed on the screen 6.

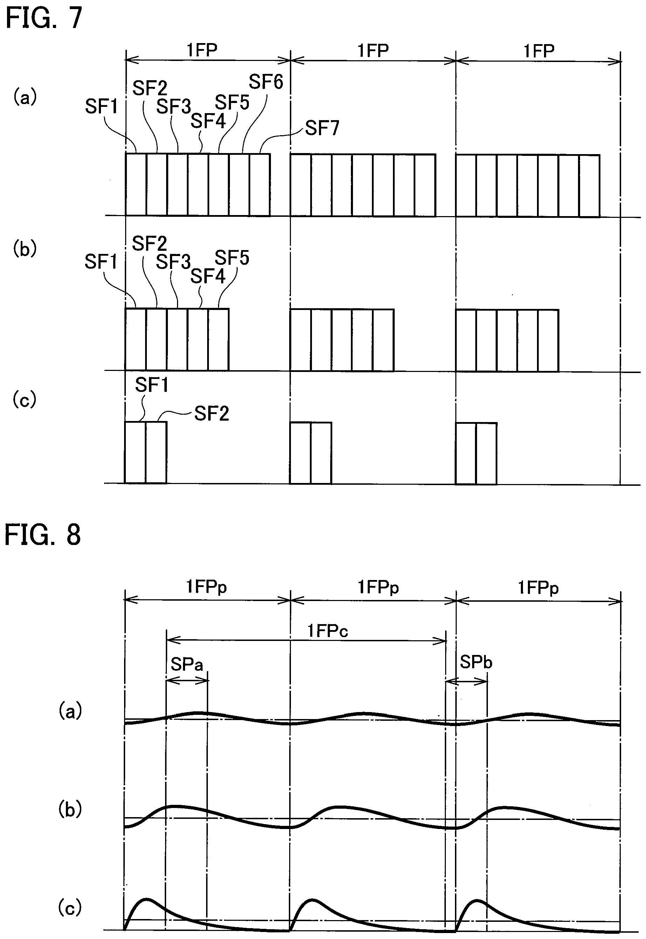

As a comparative example of Example 1, a case where the projectors 11 to 14 convert the video data VD into the sub-frame data SFD based on the same sub-frame data conversion table will be described. (a) to (c) of FIG. 7 show a case where the projectors 11 to 14 convert the video data VD into the sub-frame data SFD based on the sub-frame data conversion table 1112 shown in FIG. 4A. (a) of FIG. 7 shows the sub-frame data SFD when the gradation value is 7. (b) of FIG. 7 shows the sub-frame data SFD when the gradation value is 5. (c) of FIG. 7 shows the sub-frame data SFD when the gradation value is 2.

(a) to (c) of FIG. 8 show the response characteristics of the liquid crystal 43 to the sub-frame data SFD. In (a) to (c) of FIG. 8, the vertical axis represents the intensity of the output light of the liquid crystal 43, and the horizontal axis represents the frame period of the projectors 11 to 14 and the camera 4, and the exposure time of the camera 4. A reference numeral "1FPp" shown in (a) to (c) of FIG. 8 indicates one frame period of the projectors 11 to 14. The reference numeral 1FPp corresponds to 1FP shown in FIG. 7. The reference numeral 1FPc indicates one frame period of the camera 4. The reference numerals SPa and SPb indicate the exposure time of the camera 4. (a) to (c) of FIG. 8 respectively correspond to (a) to (c) of FIG. 7.

As shown in (a) of FIG. 8 when the gradation value is high, the display period of the sub-frame SF in one frame is long, and accordingly the pulsation of the liquid crystal 43 (fluctuation in the intensity of the output light in one frame period) is small. On the other hand, as shown in FIG. 8C, when the gradation value is low, the display period of the sub-frame SF in one frame is short, and accordingly the pulsation of the liquid crystal 43 is large. As shown in (b) of FIG. 8, the pulsation of the liquid crystal 43 has an intermediate magnitude at an intermediate gradation value.

When the camera 4 is used as an outdoor camera such as an in-vehicle camera or a wirelessly controlled drone, which is referred to as a drone, photographing is performed in a bright environment outdoors compared to indoors. When photographing is performed in a bright environment, the exposure time of the camera 4 becomes short. Therefore, when the camera 4 and the projectors 11 to 14 are asynchronous, as shown in (a) to (c) of FIG. 8, the image captured at the exposure time SPa and the image captured at the exposure time SPb have different exposure amounts. In particular, when the number of gradations is small as shown in (c) of FIG. 8, the difference in the exposure amount becomes large.

As a result, in accordance with the pulsation response of the liquid crystal 43, a phenomenon called a beat, such as a luminance variation for each frame or a light and dark stripe, occurs in the image captured by the camera 4**.** The beat becomes more conspicuous as the gradation value is small and the exposure time SP is short.

On the other hand, the projectors 11 to 14 of Example 1 convert the video data VD into pieces of sub-frame data SFD11, SFD12, SFD13, and SFD14 based on different sub-frame data conversion tables 1112, 1122, 1132, and 1142.

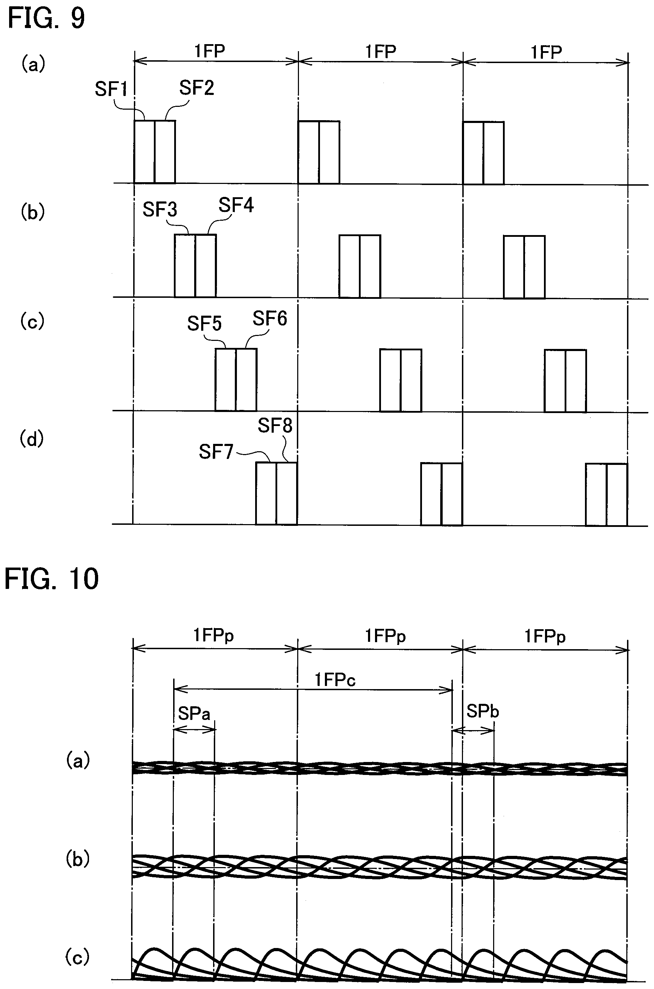

(a) to (d) of FIG. 9 show a case where the projectors 11 to 14 convert the video data VD into the pieces of sub-frame data SFD11, SFD12, SFD13, and SFD14 based on the sub-frame data conversion tables 1112, 1122, 1132 and 1142 shown in FIGS. 4A to 4D. (a) to (d) of FIG. 9 show the pieces of sub-frame data SFD11 to SFD14 when the gradation value is 2.

The projectors 11 to 14 convert the video data VD based on the different sub-frame data conversion tables 1112, 1122, 1132, and 1142 into the pieces of sub-frame data SFD11, SFD12, SFD13, and SFD14 in which the timing of the display period of the sub-frame SF is different for each of the projectors 11 to 14.

(a) to (c) of FIG. 10 show the response characteristics of the liquid crystal 43 to the pieces of sub-frame data SFD11 to SFD14 of the projectors 11 to 14. (a) to (c) of FIG. 10 correspond to (a) to (c) of FIG. 8. The projectors 11 to 14 use different sub-frame data conversion tables 1112, 1122, 1132, and 1142 to cause the timing of the display period of the sub-frame SF to differ for each of the projectors 11 to 14. Thereby, the timing of the pulsation response of the liquid crystal 43 can be dispersed. Therefore, it is possible to reduce the difference in the exposure amount between the image captured at the exposure time SPa and the image captured at the exposure time SPb. Thereby, the occurrence of a beat can be suppressed.

### [Example 2]

The projectors 11 to 14 are different in the configuration of video data processors 211 to 214 shown in FIG. 2 and the method of generating pieces of sub-frame data SFD21 to SFD24 in video data processors 211 to 214, and configurations and operations other than the above are the same. The video data processors 211 to 214 correspond to the video data processor 100, and the pieces of sub-frame data SFD21 to SFD24 correspond to the sub-frame data SFD.

The projector 11 includes a video data processor 211. As shown in FIG. 3, the video data processor 211 includes a sub-frame data generator 2111, a sub-frame data conversion table 2112, a memory controller 2113, frame buffers 2114 and 2115, a drive controller 2116, and a data transfer unit 2117.

The projector 12 includes a video data processor 212. The video data processor 212 includes a sub-frame data generator 2121, a sub-frame data conversion table 2122, a memory controller 2123, frame buffers 2124 and 2125, a drive controller 2126, and a data transfer unit 2127.

The projector 13 includes a video data processor 213. The video data processor 213 includes a sub-frame data generator 2131, a sub-frame data conversion table 2132, a memory controller 2133, frame buffers 2134 and 2135, a drive controller 2136, and a data transfer unit 2137.

The projector 14 includes a video data processor 214. The video data processor 214 includes a sub-frame data generator 2141, a sub-frame data conversion table 2142, a memory controller 2143, frame buffers 2144 and 2145, a drive controller 2146, and a data transfer unit 2147.

Video data VD is input to the sub-frame data generators 2111, 2121, 2131, and 2141. The video data VD is n-bit gradation data. The sub-frame data generator 2111 converts the video data VD into sub-frame data SFD21 composed of 2ⁿ sub-frames SF based on the sub-frame data conversion table 2112 and outputs the sub-frame data SFD21 to the memory controller 2113.

The sub-frame data generator 2121 converts the video data VD into sub-frame data SFD22 composed of 2ⁿ sub-frames SF based on the sub-frame data conversion table 2122 and outputs the sub-frame data SFD22 to the memory controller 2123.

The sub-frame data generator 2131 converts the video data VD into sub-frame data SFD23 composed of 2ⁿ sub-frames SF based on the sub-frame data conversion table 2132 and outputs the sub-frame data SFD23 to the memory controller 2133.

The sub-frame data generator 2141 converts the video data VD into sub-frame data SFD24 composed of 2ⁿ sub-frames SF based on the sub-frame data conversion table 2142 and outputs the sub-frame data SFD24 to the memory controller 2143.

The memory controllers 2113, 2123, 2133, and 2143 execute the same processing as the memory controllers 1113, 1123, 1133, and 1143. The frame buffers 2114 and 2115, the frame buffers 2124 and 2125, the frame buffers 2134 and 2135, and the frame buffers 2144 and 2145 execute the same processing respectively as the frame buffers 1114 and 1115, the frame buffers 1124 and 1125, the frame buffers 1134 and 1135, and the frame buffers 1144 and 1145.

The drive controllers 2116, 2126, 2136, and 2146 execute the same processing as the drive controllers 1116, 1126, 1136, and 1146. The data transfer units 2117, 2127, 2137, and 2147 execute the same processing as the data transfer units 1117, 1127, 1137, and 1147.

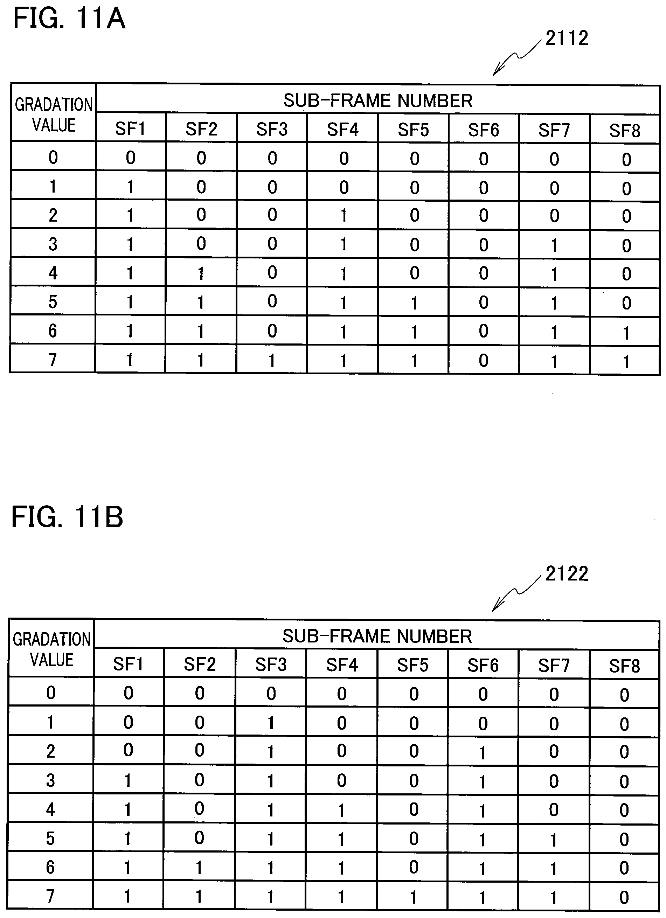

FIGS. 11A to 11D show an example of the relationship between the gradation values and the data values of the sub-frames SF in the sub-frame data conversion tables 2112, 2122, 2132, and 2142. The reference numerals SF1 to SF8 shown in FIGS. 11A to 11D indicate sub-frame numbers, and the data value of the sub-frame SF for each gradation value is shown as 0 or 1.

A data value of 1 corresponds to a display period in the pixel 30, and a data value of 0 corresponds to a non-display period in the pixel 30. FIGS. 11A to 11D show a case where the number of gradations is eight and one frame is composed of eight sub-frames SF for easy understanding. The number of gradations and the number of sub-frames are not limited to those in Example 2, and are set as appropriate.

The sub-frame data conversion tables 2112, 2122, 2132, and 2142 are set so that the timing of the display period of the sub-frame SF is different for each of the projectors 11 to 14. For example, as shown in FIG. 11A, the sub-frame data conversion table 2112 is set so that the gradation value of the sub-frame SF1 increases first. As shown in FIG. 11B, the sub-frame data conversion table 2122 is set so that the gradation value of the sub-frame SF3 increases first.

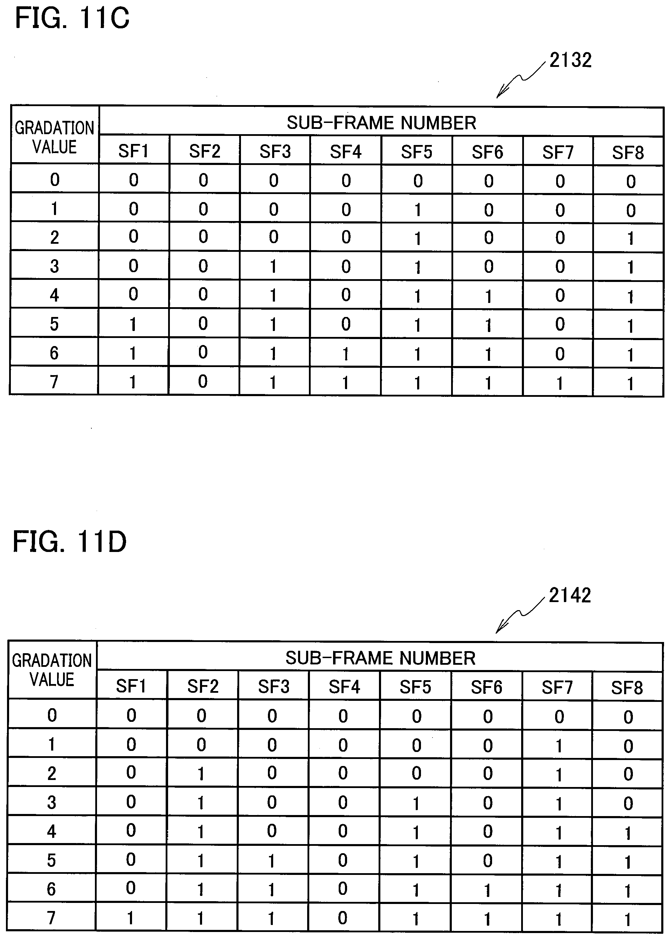

As shown in FIG. 11C, the sub-frame data conversion table 2132 is set so that the gradation value of the sub-frame SF5 increases first. As shown in FIG. 11D, the sub-frame data conversion table 2142 is set so that the gradation value of the sub-frame SF7 increases first.

In the sub-frame data conversion tables 1112, 1122, 1132, and 1142 of the Example 1, the display period of the sub-frame SF is set to be continuously increased according to the gradation value. On the other hand, in the sub-frame data conversion tables 2112, 2122, 2132, and 2142 of Example 2, the display period of the sub-frame SF is set to be intermittently increased according to the gradation value.

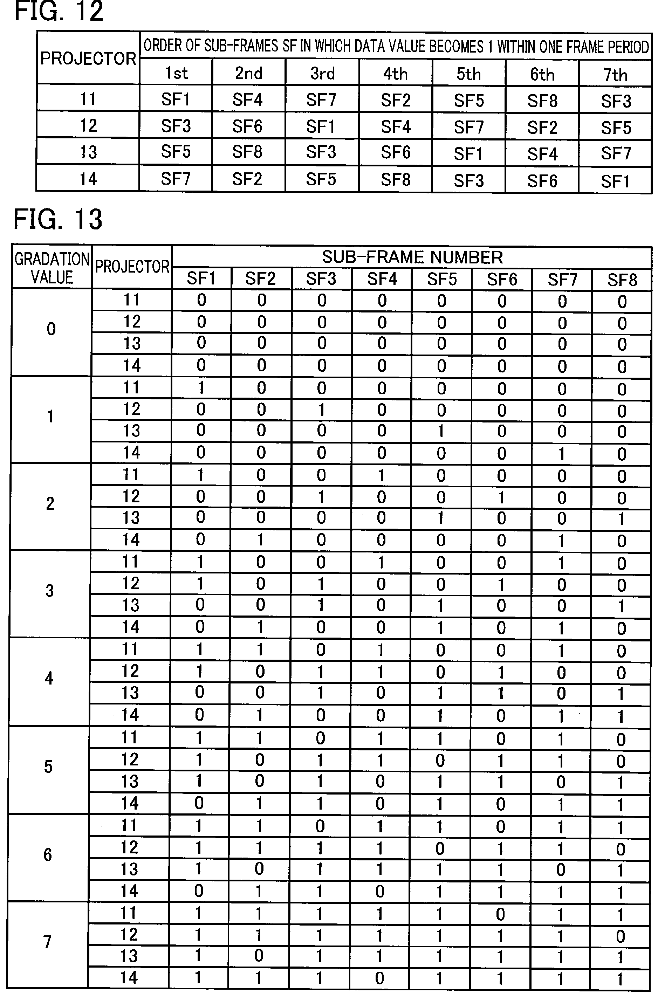

FIG. 12 shows the order of the sub-frames SF in which the data value becomes 1 in the projectors 11 to 14. FIG. 13 shows the relationship between the projectors 11 to 14 and the data values of the sub-frames SF at each gradation value based on FIGS. 11A to 11D.

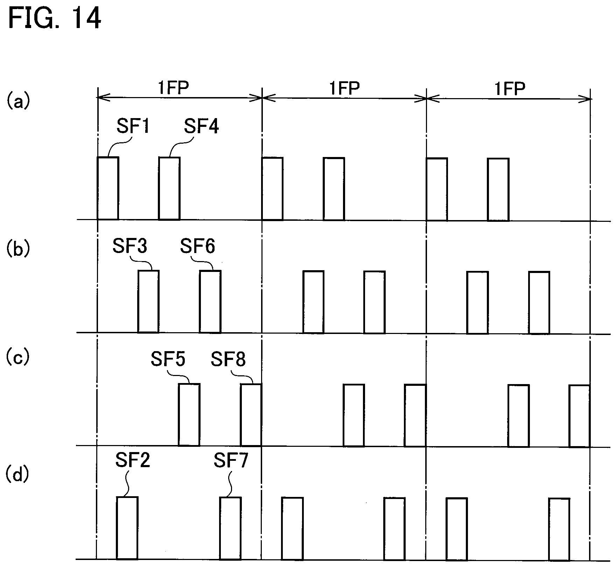

(a) to (d) of FIG. 14 show a case where the projectors 11 to 14 convert the video data VD into the pieces of sub-frame data SFD21, SFD22, SFD23, and SFD24 based on the sub-frame data conversion tables 2112, 2122, 2132, and 2142 shown in FIGS. 11A to 11D.

(a) to (d) of FIG. 14 show pieces of sub-frame data SFD21 to SFD24 when the gradation value is 2. The projectors 11 to 14 convert the video data VD into pieces of sub-frame data SFD21, SFD22, SFD23, and SFD24 in which the timings of the display periods of the sub-frames SF are different, based on the sub-frame data conversion tables 2112, 2122, 2132, and 2142 in which the sub-frame numbers whose gradation values increase first are different.

For example, when the gradation value is 2, the projector 11 displays an image in which the period of the sub-frames SF1 and SF4 is a display period. The projector 12 displays an image in which the period of the sub-frames SF3 and SF6 is a display period. The projector 13 displays an image in which the period of the sub-frames SF5 and SF8 is a display period. The projector 14 displays an image in which the period of the sub-frames SF2 and SF7 is a display period. That is, the sub-frames SF1 to SF8 constituting one frame are a display period in any one of the projectors 11 to 14. Therefore, the display image PV in which of all the sub-frames SF1 to SF8 are in the display period is displayed on the screen 6.

The projectors 11 to 14 according to Example 2 convert the video data VD, based on the different sub-frame data conversion tables 2112, 2122, 2132, and 2142, into pieces of sub-frame data SFD21, SFD22, SFD23 and SFD24 in which the timings of the display periods of the sub-frames SF are different.

The projectors 11 to 14 can disperse the timing of the pulsation response of the liquid crystal 43 by differentiating the timing of the display period of the sub-frame SF. This reduces the difference in the exposure amount of the images captured at the exposure time SP of a different timing so that the occurrence of a beat can be suppressed.

In the projector system 3 and the camera evaluation system 1, when the camera 4 and the projectors 11 to 14 are asynchronous, the timing of the display period of the sub-frame SF is made different for each projector 10. This reduces the influence of the timing of the exposure time SP of the camera 4 so that the occurrence of a beat can be suppressed. Therefore, in accordance with the projector system 3 and the camera evaluation system 1 according to an embodiment described above, the camera can be evaluated with good reproducibility.

The present invention is not limited to the embodiment described above, and various modification can be made within a scope not departing from a scope of the present invention as defined by the appended claims.

In the projector system 3 and the camera evaluation system 1 according to the embodiment described above, the configuration in which the four projectors 11 to 14 are arranged in the vertical direction has been described for easy understanding. However, the configuration is not limited to that in the embodiment described above as long as the configuration includes a plurality of projectors 10. For example, a configuration in which a plurality of projectors 10 are arranged in a horizontal direction, or a configuration in which the projectors 10 are arranged in a vertical direction and a horizontal direction may be used. By increasing the number of projectors 10 constituting the projector system 3, the timing of the pulsation response of the liquid crystal 43 can be further dispersed. Thereby, the occurrence of a beat can be further suppressed.

## Claims

1. A projector system (3) comprising:
a plurality of projectors (11 to 14), each of which is configured to generate an image (MP) based on input video data (VD), and to project the image (MP) on a single screen in synchronization with one another, thereby superimposing each of the images (MP) to display a display image (PV) on the single screen, wherein
each of the plurality of projectors (11 to 14) comprises:
a video data processor (100) comprising:
a sub-frame data conversion table (1112, 1122, 1132, 1142, 2112, 2122, 2132, 2142); and
a sub-frame data generator (1111, 1121, 1131, 1141, 2111, 2121, 2131, 2141) configured to convert the video data (VD) into sub-frame data (SFD11 to SFD14) in which one frame is composed of a plurality of sub-frames (SF1 to SF8), based on the sub-frame data conversion table (1112, 1122, 1132, 1142); and
a liquid crystal display device (20) comprising a plurality of pixels (30) arranged in a matrix at each intersection of a column data line (D) and a row scanning line (G), wherein
each of the plurality of pixels (30) comprises a first switching unit (31), a first sampling-and-holding unit (32), a second switching unit (33), a second sampling-and-holding unit (34), and a liquid crystal display element (40),
the respective projector is configured
to write sub-frame data (SFD) corresponding to each pixel (30) to the respective first sampling-and-holding unit (32) of each pixel (30) via the corresponding first switching unit (31), and
when the sub-frame data (SFD) is written to the first sampling-and-holding units (32) of all the pixels (30), to turn on the second switching units (33) of all the pixels (30) to thereby simultaneously transmit the sub-frame data (SFD) for one sub-frame written to the first sampling-and-holding unit (32) to the corresponding second sampling-and-holding unit (34) for all the pixels (30), and
the second sampling-and-holding unit (34) is configured to apply a drive voltage corresponding to the sub-frame data (SFD) to the liquid crystal display element (40), wherein
the liquid crystal display device (20) is configured to hold the sub-frame data (SFD) for one sub-frame in the second sampling-and-holding unit (34) of all the pixels (30) during one sub-frame period, and configured to sequentially write the sub-frame data (SFD) for the next one sub-frame to the first sampling-and-holding unit (32) of all the pixels (30) within one sub-frame period, thereby, the liquid crystal display device (20) is configured to switch the images (MP) for each frame based on the sub-frame data (SFD11 to SFD14) and to display the images (MP) in a frame sequential manner, wherein
the sub-frame data conversion table (1112, 1122, 1132, 1142, 2112, 2122, 2132, 2142) is configured to store for each gradation value a data value of a first value or a second value for each sub-frame (SF1 to SF8), the first value indicating a non-display period, and the second value indicating a display period, and
the sub-frame data conversion table for each of the plurality of projectors (11 to 14) is different from the sub-frame data conversion table(s) (1112, 1122, 1132, 1142, 2112, 2122, 2132, 2142) of the other one(s) of the plurality of projectors, and the different sub-frame data conversion tables (1112, 1122, 1132, 1142, 2112, 2122, 2132, 2142) are set such that for the same gradation to be displayed, the positions of sub-frames for which the second value is set differ between each of the projectors (11 to 14).

2. The projector system (3) according to claim 1, wherein
a drain of the first switching unit (31) is connected to the column data line (D), and a source of the first switching unit (31) is connected to an input side of the first sampling-and-holding unit (32), and a gate of the first switching unit (31) is connected to the row scanning line (G),
the first sampling-and-holding unit (32) is configured as a flip-flop having a static random access memory, SRAM, structure and is connected to the row scanning line (G) and is connected to the column data line (D) via the first switching unit (31),
a drain of the second switching unit (33) is connected to the output side of the first sampling-and-holding unit (32), and a source of the second switching unit (33) is connected to an input side of the second sampling-and-holding unit (34), and a gate of the second switching unit (32) is connected to a control signal line (CL),
the second sampling-and-holding unit (34) is configured as a flip-flop having a static random access memory, SRAM, structure, and
an output side of the second sampling-and-holding unit (34) is connected to the liquid crystal display element (40).

3. The projector system (3) according to claims 1 or 2, wherein
the liquid crystal display device (20) comprises a horizontal scanning circuit (21) that is connected to a plurality of column data lines (D, D1-Dx), a vertical scanning circuit (22) that is connected to a plurality of row scanning lines (G, G1-Gy), and a display pixel unit (23) including the plurality of pixels (30).

4. The projector system (3) according to any one of claims 1 to 3, wherein
the sub-frame data conversion tables (1112, 1122, 1132, 1142) for each of the plurality of projectors (11 to 14) are set so that within a period of one frame, for each gradation value, at least one of the sub-frames (SF1 to SF8) is set to the first value indicating a non-display period, while the other sub-frame(s) are set to the second value indicating a display period, wherein the number of the at least one sub-frame (SF1 to SF8) which is set to the first value indicating a non-display period is dependent on the gradation value, and wherein the position of the at least one sub-frame (SF1 to SF8) which is set to the first value indicating a non-display period is dependent on the sub-frame data conversion table and is set to differ between the different sub-frame data conversion tables for each gradation value, and
a sub-frame position for which the second value indicating a display period is first set when gradation values increase starting from the lowest gradation value is a sub-frame position for which the second value is also set for all subsequent higher gradation values in each of the sub-frame data conversion tables (1112, 1122, 1132, 1142), respectively, and the sub-frame position for which the second value is first set is set to differ between the different sub-frame data conversion tables.

5. The projector system (3) according to any one of claims1 to 4, wherein
the video data processor (100) is adapted to control the liquid crystal display device (20) such that the images (MP) are switched frame by frame and are displayed in a frame-sequential manner, by simultaneously transmitting each sub-frame data to the second sampling-and-holding unit (34), when each sub-frame data is held in the first sampling-and-holding units (32) of all the pixels, and sequentially writing each sub-frame data for a next one sub-frame to the first sampling-and-holding units (32) of all the pixels.

## Patentansprüche

1. Ein Projektorsystem (3), aufweisend:
eine Vielzahl von Projektoren (11 bis 14), die jeweils konfiguriert sind zum Generieren eines Bilds (MP) basierend auf eingegebenen Videodaten (VD) und zum Projizieren des Bilds (MP) auf eine einzelne Bildfläche in Synchronisation miteinander, um dadurch die Bilder (MP) zu überlagern und ein Anzeigebild (PV) auf der einzelnen Bildfläche anzuzeigen, wobei:
jeder aus der Vielzahl von Projektoren (11 bis 14) aufweist:
einen Videodatenprozessor (100), der aufweist:
eine Subrahmendaten-Wandlungstabelle (1112, 1122, 1132, 1142, 2112, 2122, 2132, 2142), und
einen Subrahmendaten-Generator (1111, 1121, 1131, 1141, 2111, 2121, 2131, 2141), der konfiguriert ist zum Wandeln der Videodaten (VD) zu Subrahmendaten (SFD11 bis SFD14), in denen ein Rahmen aus einer Vielzahl von Subrahmen (SF1 bis SF8) besteht, basierend auf der Subrahmendaten-Wandlungstabelle (1112, 1122, 1132, 1142), und
eine Flüssigkristallanzeige-Einrichtung (20), die aus einer Vielzahl von Bildpunkten (30) besteht, die in einer Matrix an jeder Kreuzung einer Spaltendatenleitung (D) mit einer Reihenscanleitung (G) angeordnet sind,
wobei jeder aus der Vielzahl von Bildpunkten (30) eine erste Schalteinheit (31), eine erste Abtasten-und-Halten-Einheit (32), eine zweite Schalteinheit (33), eine zweite Abtasten-und-Halten-Einheit (34) und ein Flüssigkristallanzeige-Element (40) aufweist,
wobei der entsprechende Projektor konfiguriert ist zum:
Schreiben von Subrahmendaten (SFD) in Entsprechung zu jedem Bildpunkt (30) zu der entsprechenden ersten Abtasten-und-Halten-Einheit (32) jedes Bildpunkts (30) über die entsprechende erste Schalteinheit (31), und
wenn die Subrahmendaten (SFD) in die ersten Abtasten-und-Halten-Einheiten (32) aller Bildpunkte (30) geschrieben werden, zum Einschalten der zweiten Schalteinheiten (33) aller Bildpunkte (30), um dadurch gleichzeitig die Subrahmendaten (SFD) für einen zu der ersten Abtasten-und-Halten-Einheit (32) geschriebenen Subrahmen zu der entsprechenden zweiten Abtasten-und-Halten-Einheit (34) für alle Bildpunkte (30) zu übertragen, und
wobei die zweite Abtasten-und-Halten-Einheit (34) konfiguriert ist zum Anlegen einer Treiberspannung in Entsprechung zu den Subrahmendaten (SFD) an dem Flüssigkristallanzeige-Element (40),
wobei die Flüssigkristallanzeige-Einrichtung (20) konfiguriert ist zum Halten der Subrahmendaten (SFD) für einen Subrahmen in der zweiten Abtasten-und-Halten-Einheit (34) aller Bildpunkte (30) während einer Subrahmenperiode und konfiguriert ist zum sequentiellen Schreiben der Subrahmendaten (SFD) für den nächsten Subrahmen zu der ersten Abtasten-und-Halten-Einheit (32) aller Bildpunkte (30) in einer Subrahmenperiode, sodass die Flüssigkristallanzeige-Einrichtung (20) konfiguriert ist zum Schalten der Bilder (MP) für jeden Rahmen basierend auf den Subrahmendaten (SFD11 bis SFD14) und zum Anzeigen der Bilder (MP) in einer rahmensequentiellen Weise,
wobei die Subrahmendaten-Wandlungstabelle (1112, 1122, 1132, 1142, 2112, 2122, 2132, 2142) konfiguriert ist zum Speichern, für jeden Gradationswert, eines Datenwerts eines ersten Werts oder eines zweiten Werts für jeden Subrahmen (SF1 bis SF8), wobei der erste Wert eine nicht-Anzeigeperiode angibt und der zweite Wert eine Anzeigeperiode angibt, und
wobei die Subrahmendaten-Wandlungstabelle für jeden aus der Vielzahl von Projektoren (11 bis 14) von der oder den Subrahmen-Wandlungstabellen (1112, 1122, 1132, 1142, 2112, 2122, 2132, 2142) des einen oder der mehreren anderen aus der Vielzahl von Projektoren verschieden ist, und wobei die verschiedenen Subrahmendaten-Wandlungstabellen (1112, 1122, 1132, 1142, 2112, 2122, 2132, 2142) derart gesetzt sind, dass für die gleiche anzuzeigende Gradation die Positionen von Subrahmen, für die der zweite Wert gesetzt ist, zwischen jedem der Projektoren (11 bis 14) verschieden sind.

2. Projektorsystem (3) nach Anspruch 1, wobei:
ein Drain der ersten Schalteinheit (31) mit der Spaltendatenleitung (D) verbunden ist, eine Source der ersten Schalteinheit (31) mit einer Eingangsseite der ersten Abtasten-und-Halten-Einheit (32) verbunden ist und ein Gate der ersten Schalteinheit (31) mit der Reihenscanleitung (G) verbunden ist,
die erste Abtasten-und-Halten-Einheit (32) als ein Flipflop mit einer Statischer-Direktzugriffsspeicher (Static Random Access Memory bzw. SRAM)-Struktur konfiguriert ist, mit der Reihenscanleitung (G) verbunden ist und mit der Spaltendatenleitung (D) über die erste Schalteinheit (31) verbunden ist,
ein Drain der zweiten Schalteinheit (33) mit der Ausgangsseite der ersten Abtasten-und-Halten-Einheit (32) verbunden ist, eine Source der zweiten Schalteinheit (33) mit einer Eingangsseite der zweiten Abtasten-und-Halten-Einheit (34) verbunden ist und ein Gate der zweiten Schalteinheit (32) mit einer Steuersignalleitung (CL) verbunden ist,
die zweite Abtasten-und-Halten-Einheit (34) als ein Flipflop mit einer Statischer-Direktzugriffsspeicher (Static Random Access Memory bzw. SRAM)-Struktur konfiguriert ist, und
eine Ausgangsseite der zweiten Abtasten-und-Halten-Einheit (34) mit dem Flüssigkristallanzeige-Element (40) verbunden ist.

3. Projektorsystem (3) nach Anspruch 1 oder 2, wobei:
die Flüssigkristallanzeige-Einrichtung (20) eine Horizontalscaneinheit (21), die mit einer Vielzahl von Spaltendatenleitungen (D, D1-Dx) verbunden ist, eine Vertikalscaneinheit (22), die mit einer Vielzahl von Reihenscaneinheiten (G, G1-Gy) verbunden ist, und eine Anzeigebildpunkteinheit (23), die die Vielzahl von Bildpunkten (30) enthält, aufweist.

4. Projektorsystem (3) nach einem der Ansprüche 1 bis 3, wobei:
die Subrahmendaten-Wandlungstabellen (1112, 1122, 1132, 1142) für jeden aus der Vielzahl von Projektoren (11 bis 14) derart gesetzt sind, dass in einer Periode eines Rahmens für jeden Gradationswert wenigstens einer der Subrahmen (SF1 bis SF8) zu dem ersten Wert, der eine nicht-Anzeigeperiode angibt, gesetzt ist, während der oder die anderen Subrahmen zu dem zweiten Wert, der eine Anzeigeperiode angibt, gesetzt sind, wobei die Anzahl des wenigstens einen Subrahmens (SF1 bis SF8), der zu dem ersten Wert, der eine nicht-Anzeigeperiode angibt, gesetzt ist, von dem Gradationswert abhängt, und wobei die Position des wenigstens einen Subrahmens (SF1 bis SF8), der zu dem ersten Wert, der eine nicht-Anzeigeperiode angibt, gesetzt ist, von der Subrahmendaten-Wandlungstabelle abhängt und derart gesetzt ist, dass sie zwischen den verschiedenen Subrahmendaten-Wandlungstabellen für jeden Gradationswert verschieden ist, und
eine Subrahmenposition, für die der zweite Wert, der eine Anzeigeperiode angibt, zuerst gesetzt wird, wenn Gradationswerte von dem niedrigsten Gradationswert beginnend größer werden, eine Subrahmenposition ist, für die auch der zweite Wert für alle folgenden höheren Gradationswerte in jeder der Subrahmendaten-Wandlungstabellen (1112, 1122, 1132, 1142) gesetzt werden, und wobei die Subrahmenposition, für die der zweite Wert zuerst gesetzt wird, derart gesetzt ist, dass sie zwischen den verschiedenen Subrahmendaten-Wandlungstabellen verschieden ist.

5. Projektorsystem (3) nach einem der Ansprüche 1 bis 4, wobei:
der Videodatenprozessor (100) ausgebildet ist zum Steuern der Flüssigkristallanzeige-Einrichtung (20) derart, dass die Bilder (MP) Rahmen für Rahmen geschaltet werden und in einer rahmensequentiellen Weise angezeigt werden durch das gleichzeitige Übertragen jeweils der Subrahmendaten zu der zweiten Abtasten-und-Halten-Einheit (34), wenn die Subrahmendaten jeweils in den ersten Abtasten-und-Halten-Einheiten (32) aller Bildpunkte gehalten werden, und durch das gleichzeitige Schreiben jeweils der Subrahmendaten für einen nächsten Subrahmen zu den ersten Abtasten-und-Halten-Einheiten (32) aller Bildpunkte.

## Revendications

1. Système de projection (3) comprenant :
une pluralité de projecteurs (11 à 14), dont chacun est configuré pour générer une image (MP) sur la base de données vidéo d'entrée (VD), et pour projeter l'image (MP) sur un seul écran en synchronisation les uns avec les autres, d'où il résulte la superposition de chacune des images (MP) pour afficher une image d'affichage (MP) sur le seul écran, dans lequel
chacun parmi la pluralité de projecteurs (11 à 14) comprend :
un processeur de données vidéo (100) comprenant :
une table de conversion de données de sous-trame (1112, 1122, 1132, 1142, 2112, 2122, 2132, 2142) ; et
un générateur de données de sous-trame (1111, 1121, 1131, 1141, 2111, 2121, 2131, 2141) configuré pour convertir les données vidéo (VD) en données de sous-trame (SFD11 à SFD14), dans lequel une trame est composée d'une pluralité de sous-trames (SF1 à SF8), sur la base de la table de conversion de données de sous-trame (1112, 1122, 1132, 1142) ; et
un dispositif d'affichage à cristaux liquides (20) comprenant une pluralité de pixels (30) agencés dans une matrice à chaque intersection d'une ligne de données de colonne (D) et d'une ligne de balayage de rangée (G), dans lequel
chacun parmi la pluralité de pixels (30) comprend une première unité de commutation (31), une première unité d'échantillonnage et de blocage (32), une deuxième unité de commutation (33), une deuxième unité d'échantillonnage et de blocage (34) et un élément d'affichage à cristaux liquides (40),
le projecteur respectif est configuré
pour écrire des données de sous-trame (SFD) correspondant à chaque pixel (30) dans la première unité d'échantillonnage et de blocage respective (32) de chaque pixel (30) par l'intermédiaire de la première unité de commutation respective (31), et,
lorsque les données de sous-trame (SFD) sont écrites dans les premières unités d'échantillonnage et de blocage (32) de tous les pixels (30) pour rendre passant les deuxièmes unités de commutation (33) de tous les pixels (30) pour transmettre ainsi en même temps les données de sous-trame (SFD) pour une sous-trame écrite dans la première unité d'échantillonnage et de blocage respective (32) à la deuxième unité d'échantillonnage et de blocage correspondante (34) pour tous les pixels (30) ; et
la deuxième unité d'échantillonnage et de blocage (34) est configuré pour appliquer une tension de commande correspondant aux données de sous-trame (SFD) à l'élément d'affichage à cristaux liquides (40), dans lequel
le dispositif d'affichage à cristaux liquides (20) est configuré pour maintenir les données de sous-trame (SFD) pour une sous-trame dans la deuxième unité d'échantillonnage et de blocage (34) de tous les pixels (30) pendant une période de sous-trame, et configuré pour écrire séquentiellement les données de sous-trame (SFD) pour la sous-trame suivante dans la première unité d'échantillonnage et de blocage respective (32) de tous les pixels (30) au sein d'une période de sous-trame, d'où il résulte que le dispositif d'affichage à cristaux liquides (20) est configuré pour alterner les images (MP) de chaque trame sur la base des données de sous-trame (SFD11 à SFD14) et pour afficher les images (MP) de façon séquentielle par trame, dans lequel
la table de conversion de données de sous-trame (1112, 1122, 1132, 1142, 2112, 2122, 2132, 2142) est configurée pour stocker pour chaque valeur de nuance une valeur de données d'une première valeur ou d'une deuxième valeur pour chaque sous-trame (SF1 à SF8), la première valeur indiquant une période de non-affichage et la deuxième valeur indiquant une période d'affichage, et
la table de conversion de données de sous-trame pour chacun parmi la pluralité de projecteurs (11 à 14) est différente de la table ou des tables de conversion de données de sous-trame (1112, 1122, 1132, 1142, 2112, 2122, 2132, 2142) de l'autre ou des autres projecteurs de la pluralité, et les différentes tables de conversion de données de sous-trame (1112, 1122, 1132, 1142, 2112, 2122, 2132, 2142) sont définies de sorte que, pour la même nuance à afficher, les positions de sous-trames pour lesquelles la deuxième valeur est définie soient différentes entre chacun des projecteurs (11 à 14).

2. Système de projection (3) selon la revendication 1, dans lequel
un drain de la première unité de commutation (31) est connecté à la ligne de données de colonne (D) et une source de la première unité de commutation (31) est connectée à un côté entrée de la première unité d'échantillonnage et de blocage (32) et une grille de la première unité de commutation (31) est connectée à la ligne de balayage de rangée (G),
la première unité d'échantillonnage et de blocage (32) est configurée sous forme d'une bascule ayant une structure de mémoire vive statique, SRAM, et est connectée à la ligne de balayage de rangée (G) et est connectée à la ligne de données de colonne (D) par l'intermédiaire de la première unité de commutation (31),
un drain de la deuxième unité de commutation (33) est connecté au côté sortie de la première unité d'échantillonnage et de blocage (32) et une source de la deuxième unité de commutation (33) est connectée à un côté entrée de la deuxième unité d'échantillonnage et de blocage (34) et une grille de la deuxième unité de commutation (33) est connectée à une ligne de signal de commande (CL),
la deuxième unité d'échantillonnage et de blocage (34) est configurée sous forme d'une bascule ayant une structure de mémoire vive statique, SRAM, et
un côté sortie de la deuxième unité d'échantillonnage et de blocage (34) est connecté à l'élément d'affichage à cristaux liquides (40).

3. Système de projection (3) selon la revendication 1 ou 2, dans lequel
le dispositif d'affichage à cristaux liquides (20) comprend un circuit de balayage horizontal (21) connecté à une pluralité de lignes de données de colonne (D, D1-Dx), un circuit de balayage vertical (22) connecté à une pluralité de lignes de données de rangée (G, G1-Gy) et une unité d'affichage de pixel (23) comportant la pluralité de pixels (30).

4. Système de projection (3) selon l'une quelconque des revendications 1 à 3, dans lequel
les tables de conversion de données de sous-trame (1112, 1122, 1132, 1142) pour chacun parmi la pluralité de projecteurs (11 à 14) sont définies de sorte que, au sein d'une période d'une trame, pour chaque valeur de nuance, au moins une des sous-trames (SF1 à SF8) soit définie sur la première valeur indiquant une période de non-affichage, alors que l'autre ou les autres sous-trames sont définies sur la deuxième valeur indiquant une période d'affichage, dans lequel le nombre des au moins une sous-trame (SF1 à SF8) qui sont définies sur la première valeur indiquant une période de non-affichage dépend de la valeur de la nuance, et dans lequel la position des au moins une sous-trame (SF1 à SF8) qui sont définies sur la première valeur indiquant une période de non-affichage dépend de la table de conversion de données de sous-trame et est définie pour être différente entre les différentes tables de conversion de données de sous-trame pour chaque valeur de nuance, et
une position de sous-trame pour laquelle la deuxième valeur indiquant une période d'affichage est définie tout d'abord lorsque des valeurs de nuance augmentent en partant de la valeur de nuance la plus basse est une position de sous-trame pour laquelle la deuxième valeur est également définie pour toutes les valeurs de nuance supérieures suivantes dans chacune des tables de conversion de données de sous-trame (1112, 1122, 1132, 1142), respectivement, et la position de sous-trame pour laquelle la deuxième valeur est définie tout d'abord est définie pour être différente entre les différentes tables de conversion de données de sous-trame.

5. Système de projection (3) selon l'une quelconque des revendications 1 à 4, dans lequel
le processeur de données vidéo (100) est adapté pour commander le dispositif d'affichage à cristaux liquides (20) de sorte que les images (MP) soient alternées trame par trame et soient affichées de façon séquentielle par trame, en transmettant simultanément chaque donnée de sous-trame à la deuxième unité d'échantillonnage et de blocage (34), lorsque chaque donnée de sous-trame est maintenu dans les premières unités d'échantillonnage et de blocage (32) de tous les pixels et en écrivant séquentiellement chaque donnée de sous-trame pour une sous-trame suivante dans les premières unités d'échantillonnage et de blocage (32) de tous les pixels.
